(19) Europäisches Patentamt
European Patent Office
Office européen des brevets

(11) Veröffentlichungsnummer: **0 284 865 A2**

(12) **EUROPÄISCHE PATENTANMELDUNG**

(21) Anmeldenummer: **88103973.9**

(51) Int. Cl.[4]: **C08L 83/10**, C08K 5/34

(22) Anmeldetag: **14.03.88**

(30) Priorität: **25.03.87 DE 3709779**

(43) Veröffentlichungstag der Anmeldung: **05.10.88 Patentblatt 88/40**

(84) Benannte Vertragsstaaten: **AT BE DE ES FR GB IT NL SE**

(71) Anmelder: **BAYER AG**
**Konzernverwaltung RP Patentabteilung**
**D-5090 Leverkusen 1 Bayerwerk(DE)**

(72) Erfinder: **Paul, Winfried, Dr.**
**Bethelstrasse 22**
**D-4150 Krefeld(DE)**
Erfinder: **Buysch, Hans-Josef, Dr.**
**Brandenburger Strasse 28**
**D-4150 Krefeld 12(DE)**
Erfinder: **Nising, Wolfgang, Dr**
**Mainstrasse 4**
**D-5205 St. Augustin(DE)**
Erfinder: **Scholl, Thomas, Dr.**
**Witzfeldstrasse 47 a**
**D-4005 Meerbusch 1(DE)**

(54) **Polydiorganosiloxan-Polycarbonat-Blockcokondensate mit verbessertem Schutz gegen UV-licht.**

(57) Gegenstand der vorliegenden Erfindung sind Polydiorganosiloxan-Polycarbonat-Blockcokondensaten, die dadurch gekennzeichnet sind, daß sie Hydroxybenzotriazole der Formel I

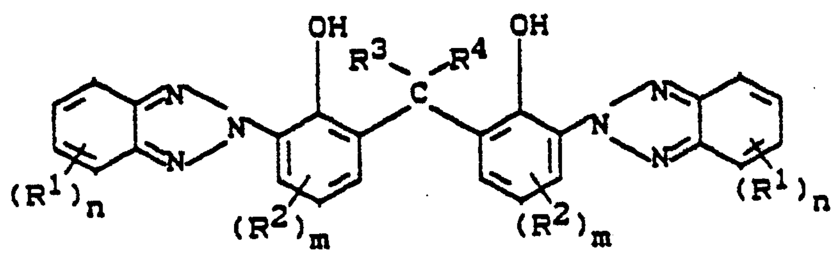

I

enthalten.

EP 0 284 865 A2

# Polydiorganosiloxan-Polycarbonat-Blockcokondensate mit verbessertem Schutz gegen UV-Licht

Gegenstand der Erfindung sind Polydiorganosiloxan-Polycarbonat-Blockcokondensate, die dadurch gekennzeichnet sind, daß sie Hydroxybenzotriazole der Formel I

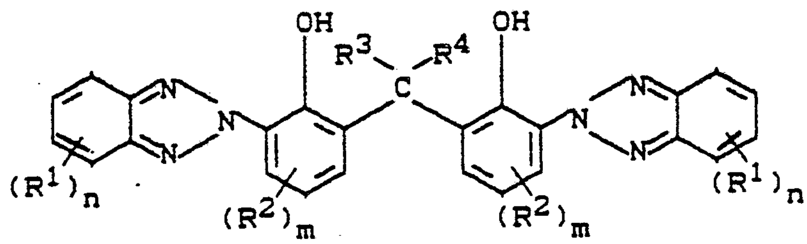

I

enthalten,
worin
$R^1$ und $R^2$ gleich oder verschieden sind und H, Halogen, $C_1$-$C_{10}$-Alkyl, $C_5$-$C_{10}$-Cycloalkyl, $C_7$-$C_{13}$-Aralkyl, $C_6$-$C_{14}$-Aryl, -O-$R^5$ oder -COOR$^5$ bedeuten mit
$R^5$ = H oder $C_1$-$C_4$-Alkyl,
$R^3$ und $R^4$ ebenfalls gleich oder verschieden sind und H, $C_1$-$C_4$-Alkyl, $C_5$-$C_6$-Cycloalkyl, Benzyl oder $C_6$-$C_{14}$-Aryl bedeuten,
"m" 1, 2 oder 3 ist und
"n" 1, 2, 3 oder 4 ist.

Bevorzugte Reste $R^1$ sind H, Cl und $CH_3$, bevorzugte Reste $R^2$ sind H, $C_1$-$C_{10}$-Alkyl, Cyclohexyl, $C_7$-$C_9$-Aralkyl, Phenyl und Naphthyl, bevorzugte Reste $R^3$ und $R^4$ sind H und $C_1$-$C_4$-Alkyl, bevorzugter Wert für "m" ist 1, bevorzugter Wert für "n" ist ebenfalls 1.

Besonders bevorzugte Verbindungen I sind solche, in denen $R^1$ = H, $R^2$ = H oder $C_1$-$C_9$-Alkyl, $R^3$ = H, $R^4$ = H m = 1 und n = 1 sind.

Unter Bedingungen der Bewitterung, in Gegenwart von Luft, Feuchtigkeit und Licht insbesondere UV-Licht, werden thermoplastische Polycarbonate abgebaut, was an der Verschlechterung mechanischer Eigenschaften, wie Schlagzähigkeit, Kerbschlagzähigkeit oder der Bruchfestigkeit bei mehraxialen Beanspruchungen, sowie an der Verschlechterung optischer Eigenschaften, z.B. dem Verlust an Oberflächenglanz und Transmission sowie der Vergilbung zu erkennen ist.

Es ist bekannt, aromatische Polycarbonate mit UV-Absorbern vom Typ der Hydroxybenzotriazole der Formel II, beispielsweise IIa oder IIb,

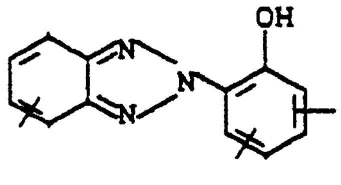

(II)

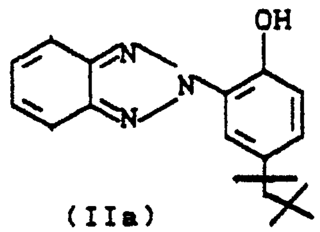

oder

(IIa)

2-(2'-Hydroxy-4'-tert. octylphenyl)-benzotriazol

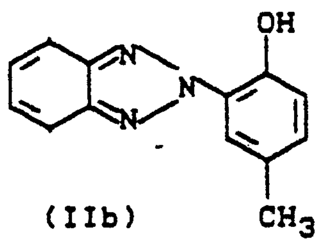

(IIb)

2-(2'-Hydroxy-4'-methyl-phenyl)-benzotriazol

gegen die abbauenden Einwirkungen von UV-Strahlen bei der Bewitterung zu schützen.

(Vergleiche Taschenbuch der Kunststoffadditive Hrsg. V.R. Gächter, H. Müller, Carl Hauser Verlag München, Wien, 1983, S. 183 ff.).

Es wurde festgestellt, daß im Anfangszustand farblose-Polydiorganosiloxan-Polycarbonat-Blockcokondensate, die sich wegen ihrer auch nach Bewitterung sehr guten Zähigkeit zur Herstellung großer Abdeckplatten durch Extrudern empfehlen, unter den gleichen Bedingungen in Anwesenheit derselben üblicherweise verwendeten Hydroxybenzotriazol-UV-Absorber rascher vergilben als lineare Homopolycarbonate.

Polydiorganosiloxan-Polycarbonat-Blockcokondensate sind z.B. aus US 3 189 662 bekannt. In der einschlägigen Literatur werden ihre verbesserten mechanischen Eigenschaften bei tiefen Tempeaturen beschrieben (z.B. B.M. Beach, R.P. Kambour und A.R. Schultz, J. Polym. Sci., Polym. Lett. Ed. 12, 247 (1974)).

Aus US 4 600 632 (Le A 23 811) ist die Verwendung von UV-Absorbern in Polydiorganosiloxan-Polycarbonat-Blockcokondensaten bekannt.

Nun wurde gefunden, daß Benzotriazolderivate der Struktur I den UV-Schutz der Polydiorganosiloxan-Polycarbonat-Blockcokondensate verbessern, was insbesondere den Schutz gegen Vergilbung anbetrifft.

Dies muß umso mehr überraschen, als sich die Stabilisatoren der Formel I in linearen Homo-Polycarbonaten bezüglich der Schutzwirkung nicht von üblicherweise verwendeten Vertretern dieser Stoffklasse unterscheiden.

Demnach bestand keine Veranlassung, gängige Benzotriazol-UV-Absorber durch diejenigen der Formel I zu ersetzen.

Hydroxy-benzotriazole der Struktur I sind bekannt, und ihre Herstellung ist in der DOS 1 670 951 und in der Tschechischen Patentschrift 146 360 beschrieben. Gegenüber den Hydroxybenzotriazolen der Formel II zeichnen sie sich durch außerordentliche Sublimationsfestigkeit also durch geringe Flüchtigkeit bei hoher Temperatur aus.

Erfindungsgemäß zu stabilisierende Polydiorganosiloxan-Polycarbonat-Blockcokondensate sind solche mit einer relativen Viskosität (gemessen an einer Lösung von 0,5 g Blockcokondensat in 1 dl Dichlormethan bei 25°C) von 1,15 bis 1,38, vorzugsweise von 1,20 bis 1,35, und einem Gehalt an Polydiorganosiloxan-Einheiten von 0,5 bis 10 Gew.-%, vorzugsweise von 1 bis 7 Gew.-%, wobei diese Polydiorganosiloxan-Einheiten im Mittel 5 bis 100, vorzugsweise 10 bis 80, Siliciumatome je Einheit enthalten.

Bevorzugte Blockcokondensate enthalten Diorganosiloxaneinheiten der Formel

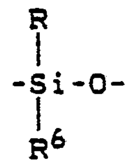

(III)

worin

R und $R^6$ unabhängig voneinander $C_1$-$C_{20}$-, vorzugsweise $C_1$-$C_6$-Alkyl, $C_6$-$C_{14}$-, vorzugsweise $C_6$-Aryl bedeuten, wobei die Alkyl-und Arylreste einmal bis vollständig durch Fluor, Chlor oder Brom substituiert sein können.

Bevorzugte Reste R und $R^6$ umfassen Ethyl, Propyl, n-und tert.-Butyl, Chlormethyl, Trifluorpropyl; Phenyl, Chlorphenyl, Naphthyl, insbesondere Methyl.

90 Bis 99,5, vorzugsweise 93 bis 99 Gew.-% des Blockcokondensats A bestehen aus Carbonylgruppen, Diphenolresten, gegebenenfalls Resten von Verzweigungsmitteln und gegebenenfalls aus Endgruppen.

Bevorzugte Diphenolreste entsprechen beispielsweise den Formeln

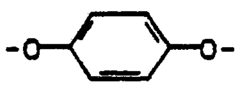

(IV)

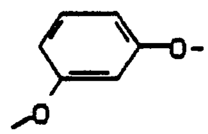

(V) und

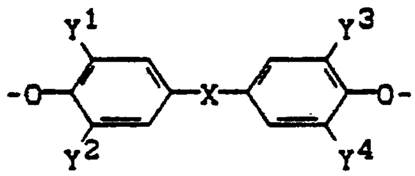

(VI)

worin

X eine Einfachbindung, $-CH_2-$, 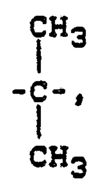 , 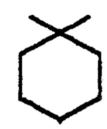 , -O-,

-S-, $-SO_2-$ oder 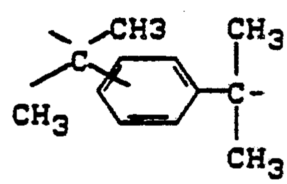 und

$Y^1$ bis $Y^4$ unabhängig voneinander Wasserstoff, $C_1$-$C_4$-Alkyl, vorzugsweise Methyl, oder Halogen, vorzugsweise Chlor oder Brom, bedeuten.

Bevorzugte Diphenolreste sind beispielsweise die Reste von
2,2-Bis-(4-hydroxyphenyl)-propan,
1,1-Bis-(4-hydroxyphenyl)-cyclohexan,
2,2-Bis-(3,5-dichlor-4-hydroxyphenyl)-propan,
2,2-Bis-(3,5-dimethyl-4-hydroxyphenyl)-propan,
Bis-(3,5-dimethyl-4-hydroxyphenyl)-ethan,
Bis-(3,5-dimethyl-4-hydroxyphenyl)-methan und
Bis-(4-hydroxyphenyl)-sulfid.

Bevorzugte Verzweigungsmittel für die Blockcokondensate sind mindestens trifunktionelle Verbindungen, wie sie z.B. in den DE-OS 1 570 533 und 1 595 762 sowie in der US-PS 3 544 514 beschrieben sind, nämlich vorzugsweise dreiwertige Phenole, aromatische Tricarbonsäuren und Hydroxycarbonsäuren mit mindestens drei funktionellen Gruppen. Beispiele bevorzugter Verzweigungsmittel sind
2,4-Bis-(4-hydroxyphenyl-isopropyl)-phenol,
2,6-Bis-(2'-hydroxy-5'-methylbenzol)-4-methylphenol,
2-(4-Hydroxyphenyl)-2-(2,4-dihydroxyphenyl)-propan,
1,4-Bis-(4,4'-dihydroxytriphenyl-methyl)-benzol,
2,4-Dihydroxybenzoesäure, Trimesinsäure, Cyanurchlorid,
3,3-Bis-(4-hydroxyphenyl)2-oxo-2,3-dihydroindol sowie
3,3-Bis-(4-hydroxy-3-methyl-phenyl)-2-oxo-2,3-dihydroindol

Wenn die Blockcokondensate in verzweigter Form eingesetzt werden sollen, beträgt die Menge verzweigender Gruppen in der Regel 0,05 bis 2 Mol-%, bezogen auf die Diphenolreste des Blockcokondensats.

Bevorzugte Endgruppen für die Blockcokondensate sind Reste von Phenol, Benzoesäure, Mono-und Dialkylphenolen und Mono-und Dialkylbenzoesäuren, deren Alkylsubstituenten insgesamt bis zu 20 C-Atomen pro Endgruppe tragen können. Besonders bevorzugte Endgruppen entsprechen der Formel

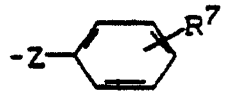

(VII)

worin
Z -O-oder $-\underset{O}{\underset{\|}{C}}-$ -bedeutet und $R^7$ -H oder $-C_1-C_{15}$ -Alkyl
bedeutet.

Beispiele bevorzugter Endgruppen sind die Reste von Phenol, p-tert.-Butyl-phenol, p-Isooctyl-phenol, p-Nonylphenol, 3,5-Di-tert.-butyl-phenol, 2-(3,5-Dimethylheptyl)-phenol und 4-(3,5-Dimethylheptyl)-phenol.

Anstelle der freien Phenole können deren Halogenkohlensäureester, anstelle der Carbonsäuren ihre Säurechloride eingesetzt werden.

Die Mengen der Endgruppen beträgt vorzugsweise 1 bis 10 Mol-%, bezogen auf die Diphenolreste des Blockcokondensats.

Die Herstellung der Blockcokondensate A kann beispielsweise aus $\alpha,\omega$-Bis(hydroxyaryloxy)-polydiorganosiloxanen, Bisphenolen, Kohlensäurederivaten, z.B. Phosgen, gegebenenfalls Kettenabbrechern und gegebenenfalls Verzweigungsmitteln nach dem Zweiphasengrenzflächenverfahren unter üblichen Bedingungen erfolgen. Auch das Umesterungs-und das sog. Pyridinverfahren sind zur Herstellung geeignet.

Die Reaktionsbedingungen für diese Verfahren sind geläufig.

Die Zahl der Siliciumatome pro Einheit (= mittlere Siloxanblocklänge) kann man bei der Herstellung durch Bestimmung der Endgruppen am Polysiloxan-Ausgangsmaterial ermitteln.

Die Ermittlung des Polymerisationsgrades der Siloxanblöcke am fertigen Blockcokondensat wird durch Verseifung des Polycarbonatanteils möglich. Der nicht verseifbare Siloxanblock wird so der polymeranalytischen Untersuchung (GPC, HPLC, Endgruppenbestimmung) zugänglich.

Das zu stabilisierende Harz kann auch eine Mischung aus üblichen polysiloxanfreien, thermoplastischen Polycarbonaten mit einer relativen Viskosität von 1,15 bis 1,38 und Polydiorganosiloxan-Polycarbonat-Blockcokondensat mit einer relativen Viskosität zwischen 1,15 und 2,5 sein, die so zusammengesetzt ist, daß der Gesamtgehalt an Polydiorganosiloxan-Einheiten, bezogen auf Gesamtgewicht Harz, wiederum 0,5 bis 10 Gew.-%, vorzugsweise 1 bis 7 Gew.-%, beträgt.

In den Fällen, in denen das Harz eine Mischung aus siloxanhaltigen Polycarbonaten und siloxanfreien Polycarbonaten ist, können die siloxanhaltigen Polycarbonate auch einen Gehalt an Polydiorganosiloxan-Einheiten von mehr als 10 Gew.-% enthalten, sofern durch Abmischung mit den siloxanfreien Polycarbonaten der Gehalt in der Polycarbonatmischung wiederum zwischen 0,5 und 10 Gew.-% liegt.

Die Harze werden erfindungsgemäß mit 0,05 Gew.-% bis 15 Gew.-%, vorzugsweise 0,2 - 10 Gew.-%, der UV-Absorber der Formel I versetzt. Sie werden mit üblichen Mischaggregaten wie Walzen, Knetern, Ein-und Mehrwellenextrudern in die Harze eingearbeitet.

Darüber hinaus können weitere Zuschläge üblicher Art wie Verstärker und Füllstoffe, Flammschutzmittel, Farbstoffe und Pigmente sowie Gleit-und Entformungsmittel dem Harz zugegeben werden.

Gegenstand der vorliegenden Erfindung ist somit auch ein Verfahren zur Stabilisierung von Polydiorganosiloxan-Polycarbonat-Blockcokondensaten, das dadurch gekennzeichnet ist, daß man 0,05

Gew.-% bis 15 Gew.-%, vorzugsweise 0,2 - 10 Gew.-%, an UV-Absorber der Formel I sowie gegebenenfalls Verstärkungsstoffe, Füllstoffe, Flammschutzmittel, Farbstoffe, Pigmente, Gleitmittel und/oder Entformungsmittel mit üblichen Mischaggregaten, wie Walzen, Knetern, Einwellenextrudern oder Mehrwellenextrudern, in die Polydiorganosiloxan-Polycarbonat-Blockcokondensate einarbeitet.

Bevorzugte Verstärkungsstoffe sind Glasfasern.

Die so stabilisierten Harze können zu Fasern, Folien, Platten, Spritzguß-und Extrusionsartikeln in bekannter Weise verarbeitet werden. Durch Extrusion können beispielsweise massive Platten oder Stegmehrfachplatten hergestellt werden, die als Verscheibungen im Hoch-und Gewächshausbau Verwendung finden. Hierfür werden erfindungsgemäß 0,05 Gew.-% bis 1 Gew.-%, vorzugsweise 0,2 Gew.-% bis 0,8 Gew.-% UV-Absorber der Formel I enthaltenden Harze eingesetzt.

Eine Anwendung der erfindungsgemäß gegen UV-Licht stabilisierten Polydiorganosiloxan-Co-polycarbonate ist weiterhin die Herstellung von mehrschichtigen Kunststofftafeln nach dem (Mehrfach-) Koextrusionsverfahren, bei dem die tragende Kernschicht aus Kunststoff, beispielsweise aus ABS, linearem oder verzweigtem Polystyrol, thermoplastischem Polycarbonat, vorzugsweise Polydiorganosiloxan-Polycarbonat-Blockcokondensaten besteht und auf einer oder beiden Seiten der Kernschicht UV-Absorptionsschichten aus Polydiorganosiloxan-Polycarbonat-Blockcokondensaten aufgebracht werden, die 1 Gew.-% bis 15 Gew.-%, vorzugsweise 5 Gew.-% bis 10 Gew.-% des UV-Absorbers der Formel I enthalten.

Die Schichtdicke der UV-Absorptionsschicht soll 10 µm bis 50 µm, vorzugsweise 20 µm bis 40 µm betragen.

Auf die der Kernschicht abgewandten Seite der UV-Absorptionsschicht kann eine weitere, im wesentlichen UV-absorberfreie Deckschicht von 10-30 µm, vorzugsweise 10-20 µm Dicke aufgebracht werden.

Die Verfahren und Apparaturen der Einfach-bzw. Mehrfach koextrusion sind aus der DE-OS 2 832 670 bekannt.

Aus der EP-OS 110 238 ist die Auftragung einer UV-Absorptionsschicht bekannt, die einen bei hohen Temperaturen flüchtigen UV-Absorber enthält.

Gegenstand der vorliegenden Erfindung ist somit auch die Verwendung der erfindungsgemäßen, Polydiorganosiloxan-Polycarbonat-Blockcokondensate zur Herstellung von Platten, wie massive Platten oder Stegmehrfachplatten, wobei der Gehalt an Hydroxybenzotriazol der Formel I 0,05 Gew.-% bis 1 Gew.-%, vorzugsweise 0,2 Gew.-% bis 0,8 Gew.-% beträgt.

Gegenstand der vorliegenden Erfindung ist außerdem die Verwendung der erfindungsgemäßen Polydiorganosiloxan-Polycarbonat-Blockcokondensate zur Herstellung von mehrschichtigen Kunststofftafeln, wobei die Schichtdicken der UV-Absorptionsschicht 10 µm bis 50 µm, vorzugsweise 20 µm bis 40 µm betragen und der Gehalt an Hydroxybenzotriazol der Formel I 1 Gew.-% bis 15 Gew.-%, vorzugsweise 5 Gew.-% bis 10 Gew.-% in der UV-Absorptionsschicht beträgt.

Gegenstand der vorliegenden Erfindung ist außerdem ein Verfahren zur Herstellung von mehrschichtigen Kunststofftafeln nach dem (Mehrfach)-Koextrusionsverfahren, das dadurch gekennzeichnet ist, daß die tragende Kernschicht aus thermoplastischem Kunststoff besteht und auf einer oder beiden Seiten der Kernschicht UV-Absorptionsschichten aus Polydiorganosiloxan-Polycarbonat-Blockcokondensaten, die 1 Gew.-% bis 15 Gew.-%, vorzugsweise 5 Gew.-% bis 10 Gew.-% an UV-Absorber der Formel I enthalten und eine Dicke von 10 µm bis 50 µm, vorzugsweise von 20 µm bis 40 µm aufweisen, in bekannter Weise aufgebracht werden.

Beispiele

**UV-Absorber 1**

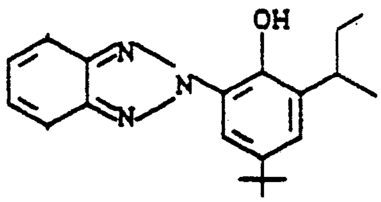

**UV-Absorber 2**

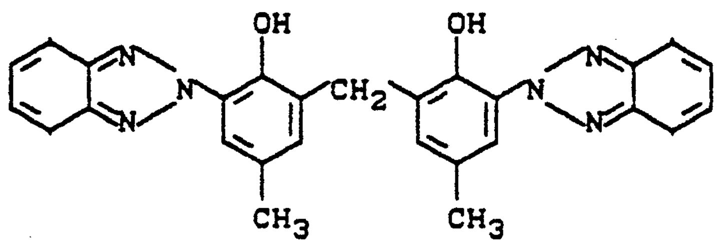

Als lineares Homopolycarbonat A wurde mit Phenol als Kettenabbrecher geregeltes Polycarbonat auf Basis Bisphenol A mit einer rel. Lösungsviskosität von 1,29 (gemessen bei 25°C in 0,5 %iger Lösung in Dichlormethan) eingesetzt.

Als Polydiorganosiloxan-Polycarbonat-Blockcokondensat B wurde ein Copolycarbonat auf Basis von Bisphenol A und 5 Gew.-% Polydimethylsiloxan der mittleren Blocklänge ($P_n$) 10 mit einer relativen Lösungsviskosität von 1,0, hergestellt unter Verwendung von Phenol als Kettenabbrecher gemäß DE-OS 3 334 782 verwendet.

Die UV-Absorber wurden zu 0,3 Gew.-% bei 290° und 80 U/m auf einem Doppelwellenextruder (ZSK 32, Werner und Pfleiderer) in die Polycarbonate eingearbeitet und das Extrudat granuliert. Auf einer Spritzgußmaschine ("Idra") wurden aus diesen Compounds Platten von 25 cm Länge, 5 cm Breite und 1 mm Dicke hergestellt.

Die Bewitterung dieser Platten erfolgte im Weather-o-meter der Fa. Atlas, USA mit einem 6,5 W-Xenon-Brenner bei einem Zyklus von 102 min Belichtung und 18 min Besprühung mit entmineralisiertem Wasser unter Belichtung. Die maximale Schwarztafeltemperatur betrug 60 +/-5°C. Nach je 1000 h wurden die Platten abgemustert und zur praxisnahen Prüfung der Zähigkeit ein an Stegmehrfachplatten in Anlehnung an DIN 53 443 entwickelter, modifizierter Kugelfallversuch durchgeführt, bei dem ein Durchstoßkörper von 5 mm Durchmesser ähnliche biaxiale Beanspruchung hervorrufen soll wie ein herabfallendes Hagelkorn. Bei Raumtemperatur schlägt eine Fallmasse von 36 kg aus 0,2 m Fallhöhe auf die Probekörper, die auf einem Auflagerung von 20 mm Innendurchmesser frei aufliegen.

Dabei wird mit der bewitterten Seite des Probekörpers in Druckzone geprüft. Das Bruchbild (BB) wird durch Zahlen charakterisiert: 1 = splitternd, 2 = glatter Riß, 3 = zähspröd, 4 = zäh.

Als Yellowness Index (YI) wird der nach DIN 6167 ermittelte Gelbwert angegeben.

Die Ergebnisse sind in der folgenden Tabelle zusammengefaßt.

| Versuch | UV-Absorber | Polycarbonat | Meßgröße | Bewitterung Xenon WOM 0 h | 1000 | 2000 h | 3000 h | 5000 h |
|---|---|---|---|---|---|---|---|---|
| A 1 | 1 | A | YI | 3,10 | 4,84 | 10,18 | 9,25 | 12,62 |
| | | | BB | 4x4 | 3x1/3 | 4x4 | 4x4 | |
| A 2 | 2 | A | YI | 4,72 | 5,57 | 10,74 | 8,72 | 12,68 |
| | | | BB | 4x4 | 4x3 | 4x4 | 4x4 | |
| B 1 | 1 | B | YI | 5,65 | 8,51 | 12,73 | 13,82 | 16,74 |
| | | | BB | 4x4 | 4x4 | 4x4 | 4x4 | |
| B 2 | 2 | B | YI | 6,90 | 7,84 | 10,66 | 11,16 | 12,86 |
| | | | BB | 4x4 | 4x4 | 4x4 | 4x4 | |

Es ergibt sich:

Die Vergilbung des Homo-Polycarbonats ist in Gegenwart des UV-Absorbers 1 nicht wesentlich anders als in der des Absorbers 2; dies gilt insbesondere für die bei langer Bewitterung gemessenen Werte (5000 h-Werte) des Yewllowness Index.

Anders sehen die Werte aus, wenn man die Bewitterungsergebnisse am Polydiorganosiloxan-copolycarbonat betrachtet.

Mit dem UV-Absorber 1 findet man im Verlaufe der Bewitterung stark ansteigende Vergilbung, so daß bereits der 2000 h-Wert auf einem Niveau liegt, das Homopolycarbonat mit den UV-Absorbern 1 oder 2 erst nach 5000 h Bewitterung erreicht, während der UV-Absorber 2 das Polydiorganosiloxan-copolycarbonat besser schützt, so daß es nicht stärker vergilbt als das Homopolycarbonat.

## Ansprüche

1. Polydiorganosiloxan-Polycarbonat-Blockcokondensate, dadurch gekennzeichnet, daß sie Hydroxybenzotriazole der Formel I

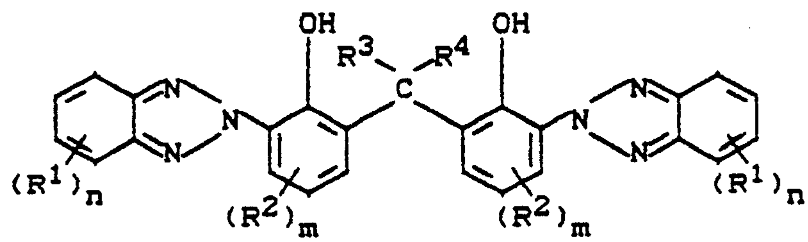

I

enthalten,
worin
$R^1$ und $R^2$ gleich oder verschieden sind und H, Halogen, $C_1$-$C_{10}$-Alkyl, $C_5$-$C_{10}$-Cycloalkyl, $C_7$-$C_{13}$-Aralkyl, $C_6$-$C_{14}$-Aryl, -O-$R^5$ oder $-\underset{\underset{O}{\|}}{C}$-O-$R^5$ bedeuten mit $R^5$ = H oder $C_1$-$C_4$-Alkyl,
$R^3$ und $R^4$ ebenfalls gleich oder verschieden sind und H, $C_1$-$C_4$-Alkyl, $C_5$-$C_6$-Cycloalkyl, Benzyl oder $C_6$-$C_{14}$-Aryl bedeuten,
"m" 1, 2 oder 3 ist und
"n" 1, 2, 3 oder 4 ist.

2. Blockcokondensate gemäß Anspruch 1, dadurch gekennzeichnet, daß in Formel I $R^1$ H, Cl oder $CH_3$ ist, $R^2$ H, $C_1$-$C_{10}$-Alkyl, Cyclohexyl, $C_7$-$C_9$-Aralkyl, Phenyl oder Naphthyl ist,
$R^3$ und $R^4$ unabhängig voneinander H oder $C_1$-$C_4$-Alkyl sind und "m" = "n" = 1 ist.

3. Blockcokondensate gemäß Anspruch 1, dadurch gekennzeichnet, daß $R^1$ = H, $R^2$ H oder $C_1$-$C_9$-Alkyl, $R^3$ = H, $R^4$ = H "m" = 1 und "n" = 1 sind.

4. Blockcokondensate gemäß Ansprüche 1 bis 3, dadurch gekennzeichnet, daß der Gehalt an Hydroxybenzotriazol der Formel I 0,05 Gew.-% bis 15 Gew.-% beträgt.

5. Verwendung von Blockcokondensaten der Ansprüche 1 bis 3 zur Herstellung von Platten, wobei der Gehalt an Hydroxybenzotriazole der Formel I 0,05 Gew.-% bis 1 Gew.-% beträgt.

6. Verwendung gemäß Anspruch 5, wobei der Gehalt an Hydroxybenzotriazol der Formel I 0,2 Gew.-% bis 0,8 Gew.-% beträgt.

7. Verwendung der Blockcokondensate der Ansprüche 1 bis 3 zur Herstellung von mehrschichtigen Kunststofftafeln, wobei die Schichtdicke der UV-Absorptionsschicht 10 µm bis 50 µm beträgt und der Gehalt an Hydroxbenzotriazol der Formel I 1 Gew.-% bis 15 Gew.-% in der UV-Absorptionsschicht beträgt.

8. Verwendung gemäß Anspruch 7, wobei der Gehalt an Hydroxybenzotriazol der Formel I 5 Gew.-% bis 10 Gew.-% in der UV-Absorptionsschicht beträgt.

9. Verfahren zur Stabilisierung von Polydiorganosiloxan-Polycarbonat-Blockcokondensaten, dadurch gekennzeichnet, daß man 0,05 Gew.-% bis 15 Gew.-% zu UV-Absorber der Formel I sowie gegebenenfalls Verstärkungsstoffe, Füllstoffe, Flammschutzmittel, Farbstoffe, Pigmente, Gleitmittel und/oder Entformungsmittel mit üblichen Mischaggregaten in die Polydiorganosiloxan-Polycarbonat-Blockcokondensate einarbeitet.

10. Verfahren zur Herstellung von mehrschichtigen Kunststofftafeln nach dem (Mehrfach-) Koextrusionsverfahren, dadurch gekennzeichnet, daß die tragende Kernschicht aus thermoplastischem Kunststoff besteht und auf einer oder beiden Seiten der Kernschicht UV-Absorptionsschichten aus Polydiorganosiloxan-Polycarbonat-Blockcokondensaten, die 1 Gew.-% bis 15 Gew.-% an UV-Absorber der Formel I enthalten und eine Dicke von 10 µm bis 50 µm aufweisen, in bekannter Weise aufgebracht werden.